# EUROPÄISCHE PATENTANMELDUNG

(11) **EP 1 650 824 A1**
(43) Veröffentlichungstag der Anmeldung: **26.04.2006**
(21) Anmeldenummer: 04025330.4
(22) Anmeldetag: 25.10.2004
(51) Int. Cl.: H01M 8/24, H01M 8/04, H01M 8/10

(54) **Brennstoffzellenkombination mit geschlossenem Wasserhaushalt**

(71) Anmelder: SFC Smart Fuel Cell AG, 85649 Brunnthal-Nord (DE)
(72) Erfinder: Müller, Jens, Dr., 81827 München (DE); Stefener, Manfred, 81827 München (DE)
(74) Vertreter: Grünecker, Kinkeldey, Stockmair & Schwanhäusser Anwaltssozietät

(57) **Zusammenfassung**

Die Erfindung betrifft ein Brennstoffzellensystem, das eine Anordnung von sauren und alkalischen Brennstoffzellen umfasst, worin zwischen der Kathode jeder sauren Brennstoffzelle und der Kathode wenigstens einer alkalischen Brennstoffzelle eine Fluidverbindung besteht, zwischen der Kathode jeder alkalischen Brennstoffzelle und der Kathode wenigstens einer sauren Brennstoffzelle eine Fluidverbindung besteht, zwischen der Anode jeder sauren Brennstoffzelle und der Anode wenigstens einer alkalischen Brennstoffzelle eine Fluidverbindung besteht, und zwischen der Anode jeder alkalischen Brennstoffzelle und der Anode wenigstens einer sauren Brennstoffzelle eine Fluidverbindung besteht. Die Erfindung betrifft weiterhin eine Brennstoffzelle, die eine Anordnung von sauren und alkalischen Membranbereichen umfasst, worin zwischen der Kathode jedes sauren Membranbereichs und der Kathode wenigstens eines alkalischen Membranbereichs eine Fluidverbindung besteht, zwischen der Kathode jedes alkalischen Membranbereichs und der Kathode wenigstens eines sauren Membranbereichs eine Fluidverbindung besteht, zwischen der Anode jedes sauren Membranbereichs und der Anode wenigstens eines alkalischen Membranbereichs eine Fluidverbindung besteht, und zwischen der Anode jedes alkalischen Membranbereichs und der Anode wenigstens eines sauren Membranbereichs eine Fluidverbindung besteht.

## Beschreibung

### Gebiet der Erfindung

Die Erfindung betrifft ein Brennstoffzellensystem, das eine Anordnung von sauren und alkalischen Brennstoffzellen umfasst. Die Erfindung betrifft weiterhin eine Brennstoffzelle, die eine Anordnung von sauren und alkalischen Membranbereichen umfasst.

### Stand der Technik

Sowohl saure als auch alkalische Brennstoffzellen sind Stand der Technik. Eine alkalische Brennstoffzelle wird beispielsweise in der EP1256142 beschrieben. In der WO 03017406 wird eine Brennstoffzellen-Kombination vorgeschlagen, die eine saure und eine alkalische Brennstoffzelle umfasst, wobei die Brennstoffzellen-Kombination so ausgebildet ist, dass ein Teil eines Reaktionsproduktes, das an einer Brennstoffzelle anfällt, der anderen Brennstoffzelle zuführbar ist.

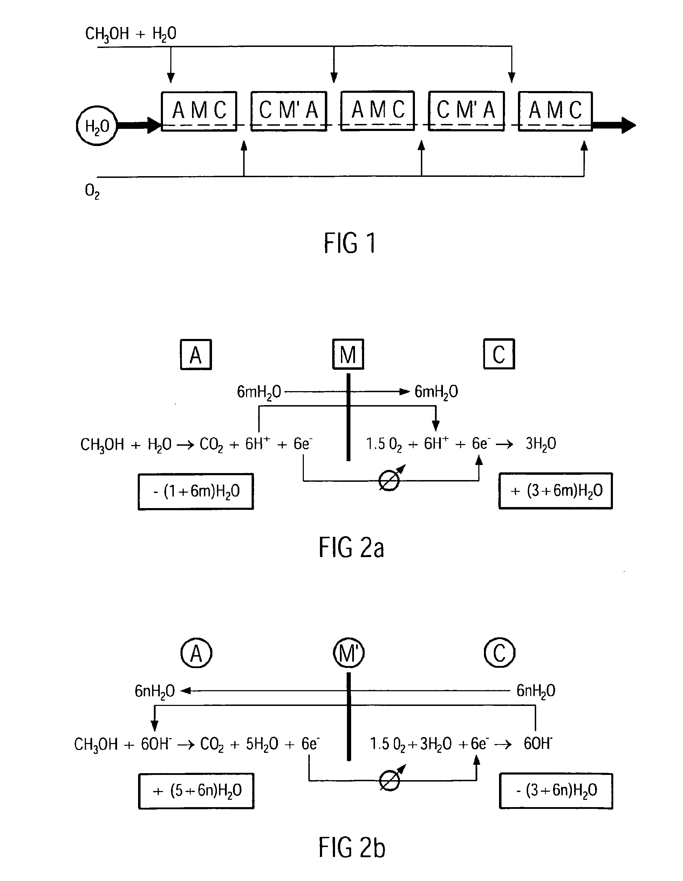

In Fig. 1 ist eine solche Kombination von mehreren alternierend angeordneten Brennstoffzellen gemäß dem Stand der Technik dargestellt. Dabei sind saure Brennstoffzellen mit einer Membran M und alkalische Brennstoffzellen mit einer Membran M' abwechselnd so angeordnet, dass zwischen benachbarten Anoden A und Kathoden C ein Wasseraustausch möglich ist.

In dieser linearen Anordnung gibt es jedoch ein Problem mit den Randzellen. Diese unterscheiden sich nämlich von den dazwischen befindlichen Zellen dadurch, dass sie nicht zu beiden Seiten an andere Zellen angrenzen. Insbesondere ist die Anode der linken und die Kathode der rechten Randzelle nicht wieder im Verbindung zu einer anderen Anode bzw. Kathode. Durch diese Asymmetrie entstehen Probleme bezüglich des Wasserhaushalts. Beispielsweise ist in der in Fig. 1 skizzierten Anordnung bislang ungelöst, wie die äußere linke Zelle mit Wasser versorgt werden kann und die äußere rechte Zelle das Wasser abgeben kann.

Die genannte Problematik ist insbesondere auch dadurch bedeutsam, dass die durch die Membran hindurchtretenden Protonen H⁺ bzw. Hydroxylionen OH- mit einer Hydrathülle umgeben sind, was einen Großteil des Wassertransports in einer Brennstoffzelle ausmacht. Diese Wasserbilanz wird nun genauer dargelegt.

Im Fall einer Methanol-Brennstoffzelle mit saurem Elektrolyten, z.B. einer Protonen leitenden Membran M, laufen die in Fig. 2a gezeigten Anoden- und Kathodenreaktionen ab (Anode A, Kathode C). Dabei trägt jedes Proton zwischen m= 1 bis 6 Wassermoleküle mit sich von der Anoden- auf die Kathodenseite. Da pro Methanolmolekül 6 Protonen beteiligt sind, handelt es sich also um 6m= 6 bis 36 Wassermoleküle, die mit durch die Membran gezogen werden. Für die chemische Bilanz ist zwar auf der Anodenseite nur 1 Wassermolekül pro Methanolmolekül zuzuführen und auf der Kathodenseite entstehen 3 abzuführende Wassermoleküle, jedoch ist auf Grund des "Drags" von Wasser durch die Membran über die Protonen als Träger die tatsächliche Bilanz so, dass pro CH₃OH-Molekül jeweils (1+6m) H₂O-Moleküle an der Anode zugeführt und (3+6m) H₂O-Moleküle an der Kathode abgeführt werden müssen.

Im Fall einer Methanol-Brennstoffzelle mit alkalischem Elektrolyten, z.B. einer Hydroxylionen leitenden Membran M', laufen die in Fig. 2b gezeigten Anoden- und Kathodenreaktionen ab (Anode A, Kathode C). Dabei trägt jedes Hydroxylion zwischen n= 1 bis 6 Wassermoleküle mit sich von der Kathoden- auf die Anodenseite. Da pro Methanolmolekül 6 Hydroxylionen beteiligt sind, handelt es sich also um 6n= 6 bis 36 Wassermoleküle, die mit durch die Membran gezogen werden. Für die chemische Bilanz sind zwar auf der Kathodenseite nur 3 Wassermoleküle pro Methanolmolekül zuzuführen, und auf der Anodenseite entstehen 5 abzuführende Wassermoleküle, jedoch ist auf Grund des "Drags" von Wasser durch die Membran über die Hydroxylionen als Träger die tatsächliche Bilanz so, dass pro CH₃OH-Molekül jeweils (3+6n) H₂O-Moleküle an der Kathode zugeführt und (5+6n) H₂O-Moleküle an der Anode abgeführt werden müssen.

An den Randzellen besteht das Problem, dass im Fall von beispielsweise m=n=3 pro in einer Zelle umgesetztem CH₃OH-Molekül, 21 H₂O-Moleküle an der Kathode zugeführt und 23 H₂O-Moleküle an der Anode abgeführt werden müssen. Dies erfordert eine umfangreiche Wasserregulierung und ist daher nachteilig.

### Beschreibung der Erfindung

Angesichts der Nachteile des Stands der Technik, liegt der Erfindung das Problem zugrunde, ein Brennstoffzellensystem zur Verfügung zu stellen, bei der ein geschlossener Wasserkreislauf realisiert wird, in dem jede einzelne Zelle z.B. von benachbarten Zellen sowohl Wasser aufnimmt als auch an sie abgibt.

Das zuvor genannte Problem wird gelöst durch ein Brennstoffzellensystem, das eine Anordnung von sauren und alkalischen Brennstoffzellen umfasst, worin zwischen der Kathode jeder sauren Brennstoffzelle und der Kathode wenigstens einer alkalischen Brennstoffzelle eine Fluidverbindung besteht, zwischen der Kathode jeder alkalischen Brennstoffzelle und der Kathode wenigstens einer sauren Brennstoffzelle eine Fluidverbindung besteht, zwischen der Anode jeder sauren Brennstoffzelle und der Anode wenigstens einer alkalischen Brennstoffzelle eine Fluidverbindung besteht, und zwischen der Anode jeder alkalischen Brennstoffzelle und der Anode wenigstens einer sauren Brennstoffzelle eine Fluidverbindung besteht.

Das genannte Problem wird weiterhin gelöst durch eine Brennstoffzelle, die eine Anordnung von sauren und alkalischen Membranbereichen umfasst, worin zwischen der Kathode jedes sauren Membranbereichs und der Kathode wenigstens eines alkalischen Membranbereichs eine Fluidverbindung besteht, zwischen der Kathode jedes alkalischen Membranbereichs und der Kathode wenigstens eines sauren Membranbereichs eine Fluidverbindung besteht, zwischen der Anode jedes sauren Membranbereichs und der Anode wenigstens eines alkalischen Membranbereichs eine Fluidverbindung besteht, und zwischen der Anode jedes alkalischen Membranbereichs und der Anode wenigstens eines sauren Membranbereichs eine Fluidverbindung besteht.

Ein erfindungsgemäßes Brennstoffzellensystem zeichnet sich dadurch aus, dass zwischen der Kathode jeder sauren Brennstoffzelle und der Kathode wenigstens jeweils einer alkalischen Brennstoffzelle eine Fluidverbindung besteht, zwischen der Kathode jeder alkalischen Brennstoffzelle und der Kathode wenigstens jeweils einer sauren Brennstoffzelle eine Fluidverbindung besteht, zwischen der Anode jeder sauren Brennstoffzelle und der Anode wenigstens jeweils einer alkalischen Brennstoffzelle eine Fluidverbindung besteht, und zwischen der Anode jeder alkalischen Brennstoffzelle und der Anode wenigstens jeweils einer sauren Brennstoffzelle eine Fluidverbindung besteht. Dadurch wird eine Vergleichmäßigung des Wasserhaushalts für alle Zellen erreicht.

Ein besonders einfaches Beispiel für das erfindungsgemäße Brennstoffzellensystem ist eine Kombination aus einer sauren und einer alkalischen Brennstoffzelle, wobei zwischen der Anode der sauren Brennstoffzelle und der Anode alkalischen Brennstoffzelle eine Fluidverbindung besteht, sowie zwischen der Kathode der sauren Brennstoffzelle und der Kathode der alkalischen Brennstoffzelle ein Fluidverbindung besteht.

Ein anderes Beispiel besteht darin, dass die Kathode oder Anode einer sauren Brennstoffzelle mit mehreren Kathoden bzw. Anoden von alkalischen Brennstoffzellen in Fluidverbindung ist. Zusätzlich oder stattdessen kann die Kathode oder Anode einer alkalischen Brennstoffzelle mit mehreren Kathoden bzw. Anoden von sauren Brennstoffzellen in Fluidverbindung sein.

Eine erfindungsgemäße Brennstoffzelle zeichnet sich dadurch aus, dass zwischen der Kathode jedes sauren Membranbereichs und der Kathode wenigstens jeweils eines alkalischen Membranbereichs eine Fluidverbindung besteht, zwischen der Kathode jedes alkalischen Membranbereichs und der Kathode wenigstens jeweils eines sauren Membranbereichs eine Fluidverbindung besteht, zwischen der Anode jedes sauren Membranbereichs und der Anode wenigstens jeweils eines alkalischen Membranbereichs eine Fluidverbindung besteht, und zwischen der Anode jedes alkalischen Membranbereichs und der Anode wenigstens jeweils eines sauren Membranbereichs eine Fluidverbindung besteht. Auf diese Weise wird eine Vergleichmäßigung des Wasserhaushalts für die Brennstoffzelle erreicht.

Das zuvor genannte Brennstoffzellensystem kann wie im Folgenden beschrieben weitergebildet werden.

Eine Weiterbildung des Brennstoffzellensystems besteht darin, dass zwischen der Kathode jeder sauren Brennstoffzelle und der Kathode genau einer alkalischen Brennstoffzelle eine Fluidverbindung besteht, zwischen der Kathode jeder alkalischen Brennstoffzelle und der Kathode genau einer sauren Brennstoffzelle eine Fluidverbindung besteht, zwischen der Anode jeder sauren Brennstoffzelle und der Anode genau einer alkalischen Brennstoffzelle eine Fluidverbindung besteht, und zwischen der Anode jeder alkalischen Brennstoffzelle und der Anode genau einer sauren Brennstoffzelle eine Fluidverbindung besteht. Dies hat den Vorteil, dass nur jeweils zwischen zwei Anoden bzw. zwei Kathoden ein Wasseraustausch ermöglicht werden muss.

Eine andere Weiterbildung des Brennstoffzellensystems besteht darin, dass die sauren und alkalischen Brennstoffzellen alternierend angeordnet sind. Eine solche Anordnung ist topologisch gesehen eine lineare, in sich geschlossene Anordnung. Sie kann mit einer geschlossen Kette verglichen werden, deren einzelne Glieder den Zellen entsprechen. Dementsprechend kann die tatsächliche räumliche Lage eines solchen Brennstoffzellensystems wie eine Kette z.B. auch mehrfach zusammengelegt sein. Diese Anordnung erübrigt besondere Vorrichtungen, die im Fall der linear offenen Anordnung für die Randzellen notwendig sind.

Eine andere Weiterbildung des Brennstoffzellensystems besteht darin, dass die alternierende Anordnung von sauren und alkalischen Brennstoffzellen ringförmig ist. Dies hat den Vorteil, dass dadurch eine besonders einfache räumliche Anordnung realisiert wird.

Eine andere Weiterbildung des Brennstoffzellensystems besteht darin, dass es nur innerhalb der Anordnung von sauren und alkalischen Brennstoffzellen einen Wasserkreislauf gibt. Auf diese Weise ist es möglich, den vollständigen Wasserkreislauf innerhalb der Brennstoffzellen zu leiten. Es werden z.B. keinerlei Rückführungen für Wasser außerhalb der Anordnung von sauren und alkalischen Brennstoffzellen benötigt.

Eine andere Weiterbildung des Brennstoffzetlensystems besteht darin, dass zwischen allen Kathoden der sauren und alkalischen Brennstoffzellen eine Fluidverbindung besteht und/oder zwischen allen Anoden der sauren und alkalischen Brennstoffzellen eine Fluidverbindung besteht. Das hat den Vorteil, dass Wasser zwischen allen Kathoden bzw. allen Anoden ausgetauscht werden kann.

Eine andere Weiterbildung des Brennstoffzellensystems besteht darin, dass die sauren und alkalischen Brennstoffzellen alternierend angeordnet sind, so dass jede saure Brennstoffzelle mit wenigstens zwei alkalischen und jede alkalische mit wenigstens zwei sauren Brennstoffzellen benachbart ist. Dies hat den Vorteil, dass auf diese Weise kurze Verbindungswege zwischen den Anoden bzw. den Kathoden erreicht werden.

Eine andere Weiterbildung des Brennstoffzellensystems besteht darin, dass die in Fluidverbindung stehenden Anoden jeweils eine Anodenkammer und die in Fluidverbindung stehenden Kathoden jeweils eine Kathodenkammer bilden. Auf diese Weise wird eine einfache Realisierung der Fluidverbindung erreicht.

Eine andere Weiterbildung des Brennstoffzellensystems besteht darin, dass es weiterhin wenigstens eine zusätzliche saure Brennstoffzelle umfasst, deren Anode mit mehreren Anodenbereichen in Fluidverbindung steht, worin die in Fluidverbindung stehenden Anoden jeweils einen Anodenbereich bilden. Auf diese Weise können Reste überschüssigen Wassers aus dem Anodenbereich entfernt werden und an der Kathode der weiteren sauren Brennstoffzelle z.B. verdampft werden. Dadurch wird verhindert, dass sich die Methanolkonzentration an den Anoden durch eine Verwässerung zu weit absenkt.

Eine andere Weiterbildung des Brennstoffzellensystems besteht darin, dass die Anode der wenigstens einen weiteren sauren Brennstoffzelle mit jeweils vier bis sechs Anodenbereichen in Fluidverbindung steht. Dies hat den Vorteil, dass die geringen Mengen überschüssigen Wassers gerade so verwendet werden, dass der Wasserbedarf der weiteren sauren Brennstoffzelle bei gleichem Stromfluss gedeckt wird.

Die verschiedenen Weiterbildungen lassen sich unabhängig voneinander einsetzen oder geeignet miteinander kombinieren.

Weitere bevorzugte Ausführungsformen der Erfindung werden im Nachfolgenden unter Bezugnahme auf die Zeichnungen beschrieben.

### Kurzbeschreibung der Zeichnungen

Fig. 1 zeigt ein Brennstoffzellensystems aus dem Stand der Technik.

Fig. 2a zeigt die ablaufenden Reaktionen in einer sauren Brennstoffzelle.

Fig. 2b zeigt die ablaufenden Reaktionen in einer alkalischen Brennstoffzelle.

Fig. 3a zeigt eine erste Ausführung eines erfindungsgemäßen Brennstoffzellensystems.

Fig. 3b zeigt eine erste Ausführung eines erfindungsgemäßen Brennstoffzellensystems.

Fig. 4 zeigt eine dritte Ausführung eines erfindungsgemäßen Brennstoffzellensystems.

Fig. 5a zeigt eine vierte Ausführung eines erfindungsgemäßen Brennstoffzellensystems.

Fig. 5b zeigt eine fünfte Ausführung eines erfindungsgemäßen Brennstoffzellensystems.

### Beschreibung der Ausführungsformen

Fig. 1 zeigt ein Brennstoffzellensystems aus dem Stand der Technik. Dabei sind saure und alkalische Brennstoffzellen abwechselnd zueinander in einer Reihe angeordnet. Die sauren Brennstoffzellen enthalten eine Membran M und die alkalischen Brennstoffzellen enthalten eine Membran M'. Die Kathode der ersten sauren Brennstoffzelle ist benachbart zur Kathode der ersten alkalischen Brennstoffzelle und diese stehen miteinander in Verbindung. Die Anode der ersten alkalischen Brennstoffzelle wiederum steht in Verbindung zur Anode der zweiten sauren Brennstoffzelle, und so weiter. An den Anoden A muss Methanol CH₃OH und Wasser H₂O, und an den Kathoden C muss Sauerstoff O₂ zugeführt werden. In dieser Anordnung wird auf Grund des "Drag"-Effekts ein großer Anteil Wasser von der linken Seite zur rechten Seite transportiert, der an der ersten Anode links zugeführt und von der letzten Kathode rechts wieder abgeführt werden muss.

Fig. 2a zeigt die ablaufenden Reaktionen in einer sauren Brennstoffzelle. In der sauren Brennstoffzelle mit saurem Elektrolyten M wird an der Anode A Methanol CH₃OH zugeführt. Ein Methanolmolekül reagiert mit einem Wassermolekül H₂O zu einem Kohlendioxidmolekül CO₂, 6 Protonen H⁺ und 6 Elektronen e⁻. Die Protonen umgeben sich mit einer Hydrathülle mit jeweils m Wassermolekülen, wobei je nach Temperatur die Zahl m zwischen 1 und 6 sein kann. Die Membran M leitet die 6 Protonen von der Anode A zur Kathode C, wo sie mit den über einen Verbraucher geführten 6 Elektronen und zugeführtem Sauerstoff zu 3 Wassermolekülen reagieren. Die dabei durch den "Drag"-Effekt mit durch die Membran M gezogenen 6m Wassermoleküle werden ebenfalls wieder frei.

Den Wasserhaushalt betreffend sind demnach von der Anodenseite A (1+6m) Wassermoleküle entfernt worden und zur Kathodenseite C sind (3+6m) Wassermoleküle hinzugekommen. Dieses entfernte bzw. hinzugekommene Wasser muss wieder zu- bzw. abgeführt werden. Allein durch den Drag werden zwischen 6 und 36 Wassermoleküle pro Methanolmolekül transportiert, bei realistischen Temperaturen für den Brennstoffzellenbetrieb etwa 6*3=18.

Fig. 2b zeigt die ablaufenden Reaktionen in einer alkalischen Brennstoffzelle. In der alkalischen Brennstoffzelle mit alkalischem Elektrolyten M' wird ebenfalls an der Anode A Methanol zugeführt. Ein Methanolmolekül reagiert mit 6 Hydroxylionen OH⁻ zu einem Kohlendioxidmolekül, 5 Wassermolekülen und 6 Elektronen. Die Hydroxylionen kommen von der Kathode C durch die Membran M' hindurch, wobei sie von einer Hydrathülle mit jeweils n Wassermolekülen umgeben sind, wobei je nach Temperatur die Zahl n zwischen 1 und 6 sein kann. An der Kathode entstehen die 6 Hydroxylionen durch die Reaktion von 3 Wassermolekülen mit zugeführtem Sauerstoff und den über einen Verbraucher geführten 6 Elektronen. Durch den "Drag"-Effekt werden mit den 6 Hydroxylionen 6n Wassermoleküle von der Kathode zur Anode transportiert, wo sie wieder frei werden.

Den Wasserhaushalt betreffen sind demnach von der Kathode (3+6n) Wassermoleküle entfernt worden und zur Anode sind (5+6n) Wassermoleküle hinzugekommen. Dieses entfernte bzw. hinzugekommene Wasser muss wieder zu- bzw. abgeführt werden. Allein durch den Drag werden zwischen 6 und 36 Wassermoleküle pro Methanolmolekül transportiert, bei realistischen Temperaturen für den Brennstoffzellenbetrieb etwa 6*3=18.

Ein Vergleich des Wassertransports in der sauren und in der alkalischen Brennstoffzelle zeigt, dass es vorteilhaft ist, eine Anode einer sauren Brennstoffzelle mit einer Anode einer alkalischen Brennstoffzelle sowie eine Kathode einer sauren Brennstoffzelle mit einer Kathode einer alkalischen Brennstoffzelle in Fluidverbindung zu bringen, so dass Wasser, dass an der Anode der einen Art entsteht an der Anode der anderen Art zugeführt werden kann, und entsprechend für die Kathoden.

Wenn in diesen Wasserbilanzen m=n ist, wobei m und n als mittlere Werte nicht notwendigerweise ganzzahlig sein müssen, so ist es also möglich, durch Herstellen einer Fluidverbindung zwischen der Kathode einer sauren Brennstoffzelle mit der Kathode einer alkalischen Brennstoffzelle, das Wasser, das an der sauren Kathode überschüssig anfällt, vollständig an der alkalischen Kathode zu verwerten. Wird eine Fluidverbindung von einer sauren Anode mit einer alkalischen Anode hergestellt, so können von den (5+6n) an der alkalischen Anode überschüssig vorhandenen Wassermolekülen dann (1 +6m) an der sauren Anode verwertet werden. Es bleiben noch (4+6n-6m), im Fall m=n also noch genau 4 Wassermoleküle an der alkalischen Anode übrig.

Im nicht unrealistischen Fall, dass n=m ist, ergänzen sich demnach eine saure und eine alkalische Kathode in idealer Weise, weil dann an der sauren Kathode pro umgesetztem Methanolmolekül genau so viel Wasser frei wird wie an der alkalischen Kathode zugeführt werden muss. In diesem Fall ergibt die Wasserbilanz durch die Fluidverbindung zwischen den Anoden, dass an dem Anodenpaar pro in jeder Zelle umgesetzten Methanolmolekül, also pro 2 umgesetzter Methanolmoleküle im Anodenpaar, jeweils 4 Wassermoleküle übrig bleiben.

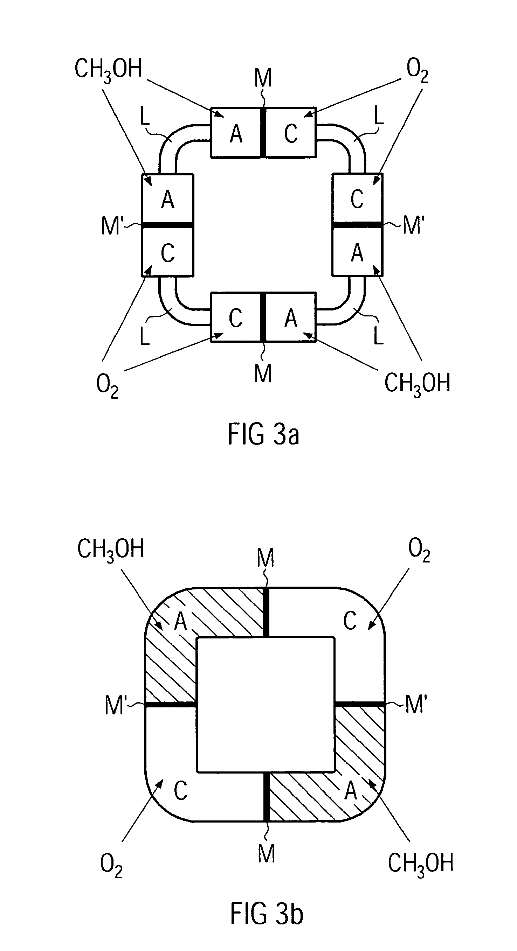

Fig. 3a zeigt eine erste Ausführungsform der Erfindung. Das Brennstoffzellensystem besteht hier aus zwei sauren und zwei alkalischen Brennstoffzellen, die jeweils durch die Art der Membran M, M' vorbestimmt sind. Das erfindungsgemäße Brennstoffzellensystem ist in dieser Ausführungsform ringförmig, so dass jede saure Brennstoffzelle benachbart zu zwei alkalischen Brennstoffzellen angeordnet ist und jede alkalische Brennstoffzelle benachbart zu zwei sauren Brennstoffzellen angeordnet ist und weiterhin, dass jeweils eine Fluidverbindung zwischen der Anode A einer sauren Brennstoffzelle und der Anode A einer alkalischen Brennstoffzelle besteht (wodurch ein Anodenpaar gebildet wird), sowie eine Fluidverbindung zwischen der Kathode C einer sauren Brennstoffzelle und der Kathode C einer alkalischen Brennstoffzelle besteht (wodurch ein Kathodenpaar gebildet wird), die jeweils durch eine Leitungseinrichtung L realisiert wird. In diesem Sinne ist die Anordnung in dieser Ausführungsform symmetrisch.

In einer solchen ringförmigen Anordnung kann das Wasser, insbesondere das durch den Drag-Effekt transportierte Wasser, in einem Kreisprozess weitergeleitet werden. Es gibt dabei keine nachteiligen Randzellen wie im Stand der Technik, an denen eine große Menge Wasser zu- oder abgeführt werden müsste. In einer bevorzugten Ausgestaltung müssen hier lediglich noch Methanol CH₃OH und Sauerstoff O₂ an den Anoden bzw. Kathoden zugeführt werden.

Diese Ausführungsform kann einfach durch Einfügen weiterer saurer und alkalischer Brennstoffzellen unter Beibehaltung einer ringförmigen alternierenden Anordnung erweitert werden.

Fig. 3b zeigt eine zweite Ausführungsform der Erfindung. Zur Vermeidung von Wiederholungen wird im Folgenden nur auf die Unterschiede zu der vorherigen Ausführungsformen eingegangen und im Übrigen auf die Beschreibungen der Fig. 3a verwiesen. Sich entsprechende Teile sind in Fig. 3b mit ähnlichen Bezugszeichen versehen. Diese Ausführungsform entspricht im Wesentlichen der ersten Ausführungsform nach Fig. 3a, jedoch mit dem Unterschied, dass die miteinander verbundenen Anoden A und die miteinander verbundenen Kathoden C, hier eine Einheit in Form einer Kammer bilden. Dies erübrigt dann die Leitungseinrichtungen nach Fig. 3a. Die Anodenkammern sind schraffiert dargestellt.

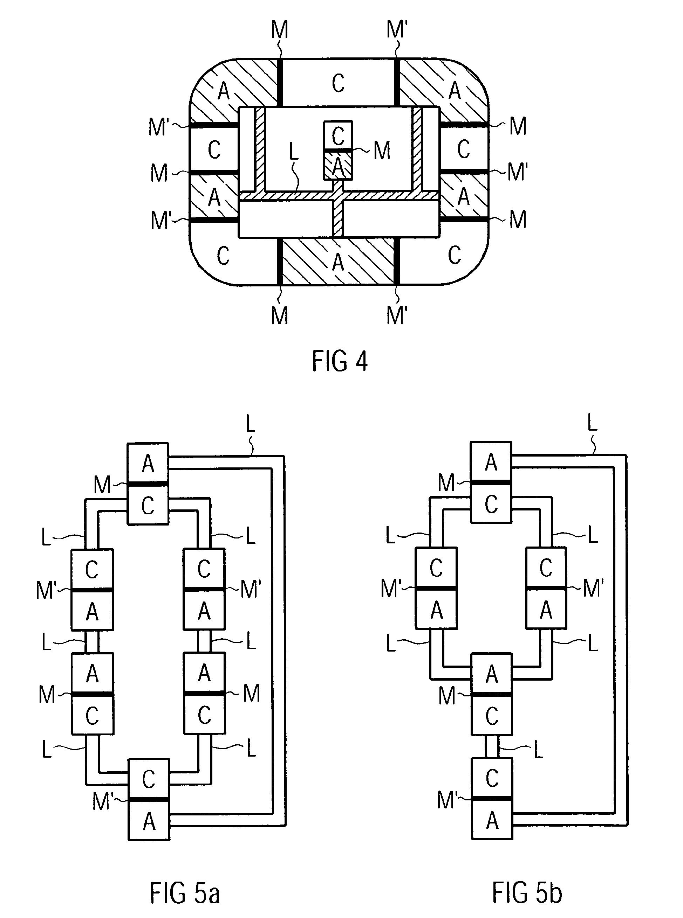

Fig. 4 zeigt eine weitere Ausführungsform der Erfindung. Zur Vermeidung von Wiederholungen wird im Folgenden nur auf die Unterschiede zu den vorherigen Ausführungsformen eingegangen und im Übrigen auf die Beschreibungen der Fig. 3 verwiesen. Sich entsprechende Teile sind in Fig. 4 mit ähnlichen Bezugszeichen versehen.

In dieser Ausführungsform ist in dem erfindungsgemäßen Brennstoffzellensystem für eine bestimmte Anzahl k von Anodenpaaren eine weitere saure Brennstoffzelle zur Wasserabführung vorgesehen. Diese dient dazu, die restliche Menge des an der alkalischen Anode entstehenden überschüssigen Wassers abzuführen und an der Kathode dieser "Wasserabführ-Brennstoffzelle" zu verdampfen. Dazu wird zwischen den Anodenpaaren und der Anode der Wasserabführ-Brennstoffzelle eine Fluidverbindung hergestellt. In der Zeichnung sind die Anodenbereiche jeweils schraffiert dargestellt.

In einer bevorzugten Ausführungsform fließt durch diese Wasserabführ-Brennstoffzelle genau die gleiche Stromstärke wie in den anderen Brennstoffzellen, um z.B. in einer Reihenschaltung der einzelnen Brennstoffzellen eingesetzt zu werden. Demnach sollte also pro umgesetztem Methanolmolekül in einer der Brennstoffzellen aus der Ringanordnung dann auch ein Methanolmolekül in der Wasserabführ-Brennstoffzelle umgesetzt werden, da jeweils 6 Elektronen als Ladungsträger beteiligt sind, was letztlich die Stromstärke bestimmt. Wenn m=n ist, so sind an jedem Anodenpaar für jeweils 6 in einer Zelle fließende Ladungen 4 H₂O zuviel vorhanden. Die saure Wasserabführ-Brennstoffzelle benötigt anodenseitig (1+6m) H₂O, so dass demnach für jeweils k=(1+6m)/4 Anodenpaare (also k zwischen 1 und 10, insbesondere zwischen 4 und 6 Anodenpaare) eine zusätzliche Wasserabführ-Brennstoffzelle benötigt wird.

Die Figuren 5a und 5b zeigen zwei weitere Ausführungsformen des erfindungsgemäßen Brennstoffzellensystems. Zur Vermeidung von Wiederholungen wird im Folgenden nur auf die Unterschiede zu den vorherigen Ausführungsformen eingegangen und im Übrigen auf die Beschreibungen der Fig. 3 verwiesen. Sich entsprechende Teile sind in Fig. 5 mit ähnlichen Bezugszeichen versehen. In Fig. 5a sind die Kathoden C der oberen (sauren) und der unteren (alkalischen) Brennstoffzelle mit jeweils den zwei Kathoden C der sich daran anschließenden Brennstoffzellen in Fluidverbindung. In Fig. 5b ist ein Beispiel dargestellt, in dem eine Anode A einer sauren Brennstoffzelle mit zwei Anoden A von zwei alkalischen Brennstoffzellen in Fluidverbindung ist.

## Patentansprüche

1. Brennstoffzellensystem, das eine Anordnung von sauren und alkalischen Brennstoffzellen umfasst, **dadurch gekennzeichnet, dass**
zwischen der Kathode jeder sauren Brennstoffzelle und der Kathode wenigstens einer alkalischen Brennstoffzelle eine Fluidverbindung besteht,
zwischen der Kathode jeder alkalischen Brennstoffzelle und der Kathode wenigstens einer sauren Brennstoffzelle eine Fluidverbindung besteht,
zwischen der Anode jeder sauren Brennstoffzelle und der Anode wenigstens einer alkalischen Brennstoffzelle eine Fluidverbindung besteht, und
zwischen der Anode jeder alkalischen Brennstoffzelle und der Anode wenigstens einer sauren Brennstoffzelle eine Fluidverbindung besteht.

2. Brennstoffzellensystem nach Anspruch 1, worin
zwischen der Kathode jeder sauren Brennstoffzelle und der Kathode genau einer alkalischen Brennstoffzelle eine Fluidverbindung besteht,
zwischen der Kathode jeder alkalischen Brennstoffzelle und der Kathode genau einer sauren Brennstoffzelle eine Fluidverbindung besteht,
zwischen der Anode jeder sauren Brennstoffzelle und der Anode genau einer alkalischen Brennstoffzelle eine Fluidverbindung besteht, und
zwischen der Anode jeder alkalischen Brennstoffzelle und der Anode genau einer sauren Brennstoffzelle eine Fluidverbindung besteht.

3. Brennstoffzellensystem nach Anspruch 2, worin die sauren und alkalischen Brennstoffzellen alternierend angeordnet sind.

4. Brennstoffzellensystem nach Anspruch 3, worin die altemierende Anordnung von sauren und alkalischen Brennstoffzellen ringförmig ist.

5. Brennstoffzellensystem nach einem der vorhergehenden Ansprüche, wobei es nur innerhalb der Anordnung von sauren und alkalischen Brennstoffzellen einen Wasserkreislauf gibt.

6. Brennstoffzellensystem nach Anspruch 1, worin zwischen allen Kathoden der sauren und alkalischen Brennstoffzellen eine Fluidverbindung besteht und/oder zwischen allen Anoden der sauren und alkalischen Brennstoffzellen eine Fluidverbindung besteht.

7. Brennstoffzellensystem nach einem der vorhergehenden Ansprüche, worin die sauren und alkalischen Brennstoffzellen alternierend angeordnet sind, so dass jede saure Brennstoffzelle mit wenigstens zwei alkalischen und jede alkalische mit wenigstens zwei sauren Brennstoffzellen benachbart ist.

8. Brennstoffzellensystem nach einem der vorhergehenden Ansprüche, worin die in Fluidverbindung stehenden Anoden jeweils eine Anodenkammer und die in Fluidverbindung stehenden Kathoden jeweils eine Kathodenkammer bilden.

9. Brennstoffzellensystem nach einem der Ansprüche 1-7, umfassend wenigstens eine zusätzliche saure Brennstoffzelle, deren Anode mit mehreren Anodenbereichen in Fluidverbindung steht, worin die in Fluidverbindung stehenden Anoden jeweils einen Anodenbereich bilden.

10. Brennstoffzellensystem nach Anspruch 9, worin die Anode der wenigstens einen weiteren sauren Brennstoffzelle mit jeweils vier bis sechs Anodenbereichen in Fluidverbindung steht.

11. Brennstoffzelle, die eine Anordnung von sauren und alkalischen Membranbereichen umfasst, **dadurch gekennzeichnet, dass**
zwischen der Kathode jedes sauren Membranbereichs und der Kathode wenigstens eines alkalischen Membranbereichs eine Fluidverbindung besteht,
zwischen der Kathode jedes alkalischen Membranbereichs und der Kathode wenigstens eines sauren Membranbereichs eine Fluidverbindung besteht,
zwischen der Anode jedes sauren Membranbereichs und der Anode wenigstens eines alkalischen Membranbereichs eine Fluidverbindung besteht, und
zwischen der Anode jedes alkalischen Membranbereichs und der Anode wenigstens eines sauren Membranbereichs eine Fluidverbindung besteht.
